# EUROPEAN PATENT APPLICATION

(11) **EP 4 806 546 A1**
(43) Date of publication of application: **16.09.2026**
(21) Application number: 24888447.0
(22) Date of filing: 08.10.2024
(51) Int. Cl.: B01F 23/2361, B01F 21/10, B01F 31/24, B01F 35/41, B01F 35/42, B01F 35/213, B01F 35/221, B67D 1/04, B01F 101/14

(54) **CARBON DIOXIDE-DISSOLVING DEVICE**

(30) Priority: 08.11.2023 JP 2023191109
(71) Applicant: Asahi Group Holdings, Ltd., Tokyo 130-8602 (JP)
(72) Inventor: MITSUHATA, Shinsuke, Moriya-shi, Ibaraki 302-0106 (JP); KUMAMOTO, Masato, Asigarakami-gun, Kanagawa 258-0019 (JP); NAKAMURA, Hitoshi, Yokohama-shi, Kanagawa 220-0024 (JP)
(74) Representative: J A Kemp LLP
(86) International application number: PCT/JP2024/036030
(87) International publication number: WO 2025/100148

(57) **Abstract**

A carbon dioxide gas dissolution apparatus 100 dissolves a carbon dioxide gas in a drink in a container 10. The carbon dioxide gas dissolution apparatus 100 includes a head 20 attached to a mouth portion of the container 10 and configured to support the container 10 in a hanging state; a supply portion 40 configured to supply a carbon dioxide gas into the container 10 via the head 20; a vibration generator 30 configured to support the head 20 and apply a vibration to the head 20; and a support structure 50 configured to support the vibration generator 30 via a vibration absorption portion 51.

## Description

### TECHNICAL FIELD

The present invention relates to a carbon dioxide gas dissolution apparatus that dissolves a carbon dioxide gas in a drink in a container.

### BACKGROUND ART

PTL 1 describes a carbonated water maker formed by a carbonated water production portion and a vibration portion. The vibration portion is screw- or flange-joined to the carbonated water production portion, and supports the carbonated water production portion from below. The vibration portion includes a vibration mechanism container, a motor arranged in the bottom portion of the container, and an eccentric rotor provided on the shaft of the motor. The carbonated water production portion includes a component that blows a carbon dioxide gas into water in a sealed container, and a vibrator that vertically vibrates in the sealed container. When a vibration generated by the vibration portion vibrates the vibrator, the carbon dioxide gas can be dissolved in water within a short time.

### CITATION LIST

### PATENT LITERATURE

PTL 1: Japanese Patent Laid-Open No. 3-165823

### SUMMARY OF INVENTION

### TECHNICAL PROBLEM

As described in PTL 1, in the configuration in which the container is supported from below and a vibration is transmitted to the container, when applying a large vibration to the container, the vibration portion vibrates to make the posture of the apparatus unstable, and it is thus difficult to apply a large vibration to the container. Therefore, in such an apparatus, it is difficult to efficiently dissolve a carbon dioxide gas in a drink.

The present invention provides a carbon dioxide gas dissolution apparatus advantageous in efficiently dissolving a carbon dioxide gas in a drink.

### SOLUTION TO PROBLEM

One aspect of the present invention relates to a carbon dioxide gas dissolution apparatus for dissolving a carbon dioxide gas in a drink in a container, and the carbon dioxide gas dissolution apparatus comprises a head attached to a mouth portion of the container and configured to support the container in a hanging state, a supply portion configured to supply a carbon dioxide gas into the container via the head, a vibration generator configured to support the head and apply a vibration to the head, and a support structure configured to support the vibration generator via a vibration absorption portion.

### ADVANTAGEOUS EFFECTS OF INVENTION

According to the present invention, there is provided a carbon dioxide gas dissolution apparatus advantageous in efficiently dissolving a carbon dioxide gas in a drink.

### BRIEF DESCRIPTION OF DRAWINGS

Fig. 1 is a view schematically showing the configuration of a carbon dioxide gas dissolution apparatus according to an embodiment;
Fig. 2 is a view showing an example of the configuration of a supply portion that supplies a carbon dioxide gas into a container;
Fig. 3 is a timing chart showing an example of control of the pressure in the container by a controller; and
Fig. 4 is a view showing an example of the configuration of a head.

### DESCRIPTION OF EMBODIMENTS

An embodiment of the present invention will be described in detail below with reference to the accompanying drawings. Note that the following embodiment does not limit the invention according to the scope of the appended claims. Not all combinations of features described in the embodiment are essential to the invention. Two or more of the plurality of features described in the embodiment may arbitrarily be combined. The same reference numerals denote the same or similar parts and a repetitive description thereof will be omitted.

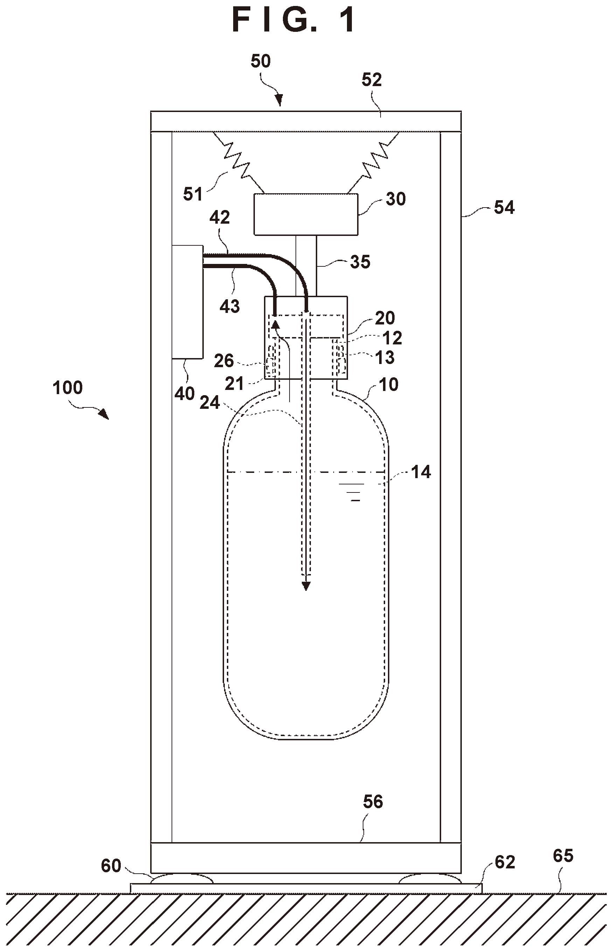

Fig. 1 schematically shows the configuration of a carbon dioxide gas dissolution apparatus 100 according to an embodiment. The carbon dioxide gas dissolution apparatus 100 is an apparatus that dissolves a carbon dioxide gas in a drink 14 in a container 10. The container 10 can be made of a material such as plastic or a metal. The container 10 includes a mouth portion 12, and can be sealed when the mouth portion 12 is closed. The drink 14 may be, for example, a non-carbonated drink such as water or a carbonated drink such as carbonated water. In the latter case, the carbon dioxide gas dissolution apparatus 100 additionally dissolves a carbon dioxide gas in the drink 14.

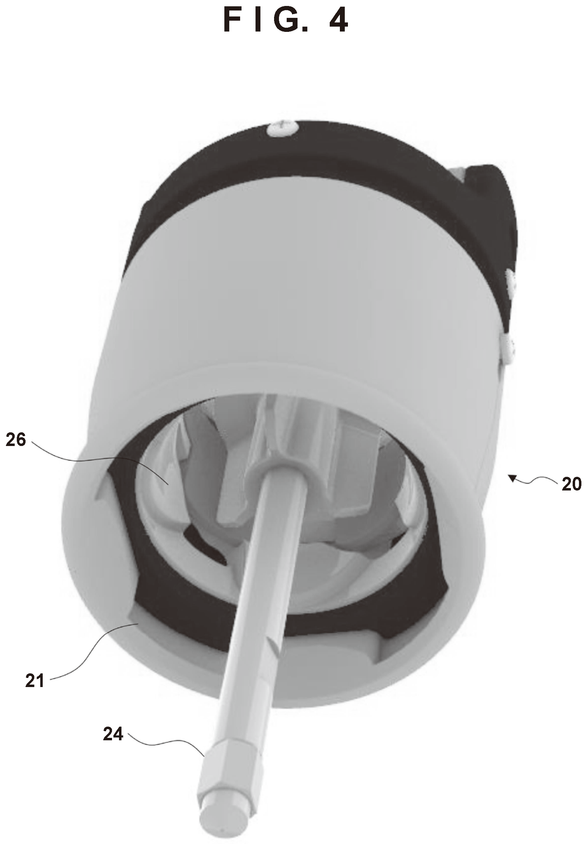

The carbon dioxide gas dissolution apparatus 100 can include a head 20. The head 20 is attached to the mouth portion 12 of the container 10, and can be configured to support the container 10 in a hanging state. Fig. 4 shows an example of the configuration of the head 20. The head 20 can have an opening 21 into which the mouth portion 12 of the container 10 is inserted. The head 20 can be set in a locked state in which the container 10 is held when the mouth portion 12 of the container 10 is inserted into the opening 21. In addition, the head 20 can be set, by an unlocking operation, in an unlocked state in which the container 10 is detachable from the head 20. For example, the mouth portion 12 of the container 10 can include a first engaging portion 13 and the head 20 can include a second engaging portion 26 that engages with the first engaging portion 13 of the mouth portion 12 to implement the locked state. In another example, the head 20 can have a bayonet mechanism in which the container 10 is held in the locked state and is set in the unlocked state by an unlocking operation. The head 20 can also include a nozzle 24 for supplying a carbon dioxide gas into the container 10.

The carbon dioxide gas dissolution apparatus 100 can include a supply portion 40 that supplies a carbon dioxide gas into the container 10 via the head 20. In an example, the supply portion 40 can be configured to supply a carbon dioxide gas into the container 10 by supplying the carbon dioxide gas to the nozzle 24 of the head 20. The carbon dioxide gas dissolution apparatus 100 can include a vibration generator 30. The vibration generator 30 can be configured to support the head 20. The vibration generator 30 may directly support the head 20 or support the head 20 via a connecting member 35. The vibration generator 30 can be configured to generate a vibration and apply the vibration to the head 20. The vibration generator 30 can typically include a rotation motor that converts electric energy into a vibration. An eccentric weight is connected to the output shaft of the rotation motor, and the output shaft can rotationally be driven to generate a vibration. The vibration generator 30 can be configured to support the head 20 in a hanging state.

The carbon dioxide gas dissolution apparatus 100 can include a support structure 50 that supports the vibration generator 30 via a vibration absorption portion 51. The support structure 50 supports the container 10 via the vibration absorption portion 51, the head 20, and the vibration generator 30. The structure in which the support structure 50 supports the vibration generator 30 via the vibration absorption portion 51 is advantageous in suppressing the support structure 50 from vibrating due to a vibration generated by the vibration generator 30. The vibration absorption portion 51 can include an elastic member. The elastic member can be, for example, a spring such as a coil spring. Alternatively, the elastic member can be a stretchable member such as rubber. The vibration absorption portion 51 can include, for example, a plurality of elastic members. The plurality of elastic members are preferably, for example, three or more elastic members or four or more elastic members. The plurality of elastic members can be arranged to locate the head 20 by the balance among them. The support structure 50 can include, for example, a top plate 52, a bottom plate 56, and a plurality of columns 54 that connect the top plate 52 and the bottom plate 56. The vibration absorption portion 51 can be supported by the top plate 52.

In the configuration in which the support structure 50 supports the vibration generator 30 via the vibration absorption portion 51 and the vibration generator 30 supports the container 10 via the head 20, it is possible to suppress a vibration of the support structure 50 and stably support the container 10. Therefore, in this configuration, a larger vibration can be applied to the container 10, as compared with the configuration in which the container 10 is supported from below and applied with a vibration. This can efficiently dissolve a carbon dioxide gas in a drink.

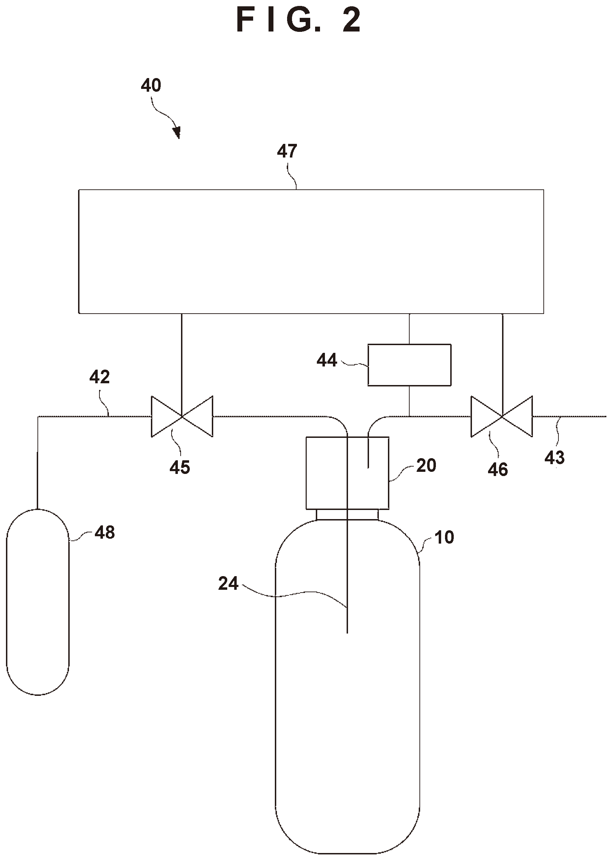

Fig. 2 shows an example of the configuration of the supply portion 40. The supply portion 40 can include a supply channel 42 that supplies, into the container 10, a carbon dioxide gas supplied from a carbon dioxide gas source (for example, a carbon dioxide gas cylinder) 48, a first valve 45 arranged in the supply channel 42, and a sensor 44 that detects the pressure in the container 10. Furthermore, the supply portion 40 can include a controller 47 that controls the first valve 45. The controller 47 can control the first valve 45 based on the pressure detected by the sensor 44.

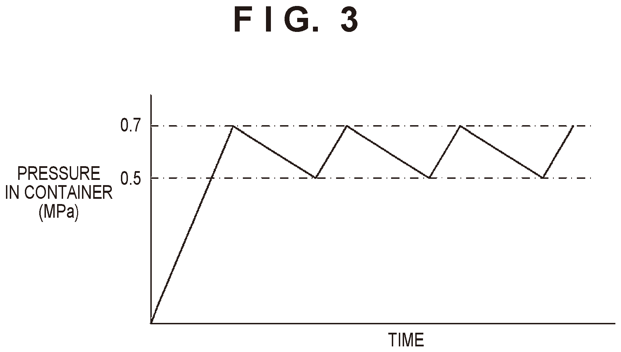

Fig. 3 shows an example of control of the pressure in the container 10 by the controller 47. In an example, the controller 47 can control the first valve 45 so that the pressure (that is, the pressure in the container 10) detected by the sensor 44 increases to a predetermined first pressure, and then control the first valve 45 to close it. Furthermore, when the pressure detected by the sensor 44 decreases to a predetermined second pressure lower than the first pressure after the first valve 45 is closed, the controller 47 can control the first valve 45 so that the pressure detected by the sensor 44 increases again to the first pressure, and then control the first valve 45 to close it. The first pressure is, for example, 0.7 MPa but may be a different pressure. The second pressure is, for example, 0.5 MPa but may be a different pressure.

If the first valve 45 is closed after the pressure in the container 10 increases to the first pressure, the carbon dioxide gas gradually dissolves in the drink 14 in the container 10, thereby decreasing the pressure in the container 10. Control of the first valve 45 by the controller 47 is performed so that the pressure in the container 10 is maintained within a range of the first pressure as an upper limit to the second pressure as a lower limit.

The supply portion 40 may further include a discharge channel 43 that discharges the carbon dioxide gas in the container 10, and a second valve 46 arranged in the discharge channel 43. The controller 47 can control the second valve 46 to open it so as to decrease the pressure in the container 10. For example, when the pressure in the container 10 reaches a third pressure higher than the first pressure, the controller 47 can operate to open the second valve 46. In this case, the second valve 46 functions as a safety valve. Alternatively, when ending processing of dissolving the carbon dioxide gas in the drink 14, the controller 47 can operate to open the second valve 46.

In an example, by controlling the pressure, as shown in Fig. 3, the gas volume (GV) of the drink 14 can be increased to 6.4 in 10 sec, and can be increased to 6.8 in 60 sec. The GV is a value obtained by dividing the volume of the carbon dioxide gas dissolved in the drink by the volume of the drink in a standard state (1 atm and 0°C).

The carbon dioxide gas dissolution apparatus 100 can include a fixing portion 60 that fixes the support structure 50 onto a support base 65. The fixing portion 60 can include, for example, a suction cup. In this case, a suction sheet 62 may be arranged between the support base 65 and the fixing portion 60. The suction sheet 62 can function to increase the suction force of the suction cup. The fixing portion 60 may include another component, for example, a mechanism (for example, a clamp mechanism or a clip mechanism) that mechanically connects the support structure 50 to the support base 65. By providing the fixing portion 60, it is possible to prevent the carbon dioxide gas dissolution apparatus 100 from falling or moving on the support base 65. In addition, by providing the fixing portion 60, it is possible to reduce the vibration of the carbon dioxide gas dissolution apparatus 100 on the support base 65.

The present invention is not limited to the above embodiment and various modifications and changes can be made within the spirit and scope of the present invention.

### REFERENCE SIGNS LIST

10: container, 12: mouth portion, 14: drink, 20: head, 21: opening, 24: nozzle, 26: second engaging portion, 30: vibration generator, 35: connecting member, 40: supply portion, 42: supply channel, 43: discharge channel, 44: sensor, 45: first valve, 46: second valve, 47: controller, 48: carbon dioxide gas source, 50: support structure, 51: vibration absorption portion, 60: fixing portion, 62: suction sheet, 65: support base

## Claims

1. A carbon dioxide gas dissolution apparatus for dissolving a carbon dioxide gas in a drink in a container, comprising:
a head attached to a mouth portion of the container and configured to support the container in a hanging state;
a supply portion configured to supply a carbon dioxide gas into the container via the head;
a vibration generator configured to support the head and apply a vibration to the head; and
a support structure configured to support the vibration generator via a vibration absorption portion.

2. The carbon dioxide gas dissolution apparatus according to claim 1, wherein the vibration generator supports the head in a hanging state.

3. The carbon dioxide gas dissolution apparatus according to claim 2, wherein the vibration absorption portion includes an elastic member.

4. The carbon dioxide gas dissolution apparatus according to claim 3, wherein the elastic member includes a spring.

5. The carbon dioxide gas dissolution apparatus according to any one of claims 1 to 4, wherein the head has an opening into which the mouth portion of the container is inserted, is set in a locked state in which the container is held when the mouth portion is inserted into the opening, and is set in an unlocked state in which the container is detachable from the head by an unlocking operation.

6. The carbon dioxide gas dissolution apparatus according to any one of claims 1 to 5, wherein the supply portion includes
a supply channel configured to supply, into the container, a carbon dioxide gas supplied from a carbon dioxide gas source,
a first valve arranged in the supply channel,
a sensor configured to detect a pressure in the container, and
a controller configured to control the first valve so that the pressure detected by the sensor increases to a first pressure and then control the first valve to close the first valve.

7. The carbon dioxide gas dissolution apparatus according to claim 6, wherein in a case where the pressure detected by the sensor decreases to a second pressure lower than the first pressure after the first valve is closed, the controller controls the first valve so that the pressure detected by the sensor increases again to the first pressure and then controls the first valve to close the first valve.

8. The carbon dioxide gas dissolution apparatus according to claim 6, further comprising:
a discharge channel configured to discharge a carbon dioxide gas in the container; and
a second valve arranged in the discharge channel,
wherein the controller opens the second valve so as to decrease the pressure in the container.

9. The carbon dioxide gas dissolution apparatus according to any one of claims 1 to 8, further comprising a fixing portion configured to fix the support structure onto a support base.

10. The carbon dioxide gas dissolution apparatus according to claim 9, wherein the fixing portion includes a suction cup.

11. The carbon dioxide gas dissolution apparatus according to claim 9, wherein the fixing portion includes a mechanism configured to mechanically connect the support structure to the support base.
